# EUROPEAN PATENT APPLICATION

(11) **EP 3 461 547 A1**
(43) Date of publication of application: **03.04.2019**
(21) Application number: 17761427.8
(22) Date of filing: 17.07.2017
(51) Int. Cl.: B01D 35/14

(54) **WATER PATH PLATE ASSEMBLY FOR WATER PURIFIER AND WATER PURIFIER HAVING SAME**

(71) Applicant: Foshan Shunde Midea Water Dispenser Mfg. Co., Ltd., Foshan, Guangdong 528311 (CN)
(72) Inventor: WU, Weiping, Beijiao, Shunde Foshan, Guangdong 528311 (CN); ANG, Yongcheng, Beijiao, Shunde Foshan, Guangdong 528311 (CN); ZHANG, Xingzhi, Beijiao, Shunde Foshan, Guangdong 528311 (CN); ZENG, Zhenjie, Beijiao, Shunde Foshan, Guangdong 528311 (CN)
(74) Representative: Lam, Alvin
(86) International application number: PCT/CN2017/093201
(87) International publication number: WO 2019/014816

(57) **Abstract**

A waterway plate assembly (100) for a water purifier and a water purifier having the same are provided. The waterway plate assembly (100) includes a waterway plate main body (10). The waterway plate main body (10) has a first end and a second end along a length direction of the waterway plate main body (10). The first end is provided with a filter cartridge interface (111) and the second end is provided with an electric element interface (112). With the waterway plate assembly (100) for the water purifier according to embodiments of the present disclosure, a separation of water and electricity is realized, and a short-circuited risk for the electric element during the replacement of the filter cartridge or a leakage of the filter cartridge interface is reduced.

## Description

### FIELD

The present disclosure relates to a technical field of water purifier apparatus, and more particularly to a waterway plate assembly for a water purifier and a water purifier having the same.

### BACKGROUND

In the related art, a filter cartridge interface of a waterway plate for a water purifier has a smaller distance to elements such as a solenoid valve. During a replacement of the filter cartridge or a leakage of the filter cartridge interface, the solenoid valve is easily caused to be short-circuited, which affects uses of electric elements such as the solenoid valve, thereby influencing the service life of the water purifier.

### SUMMARY

The present disclosure seeks to solve at least one of the technical problems existing in the related art.

Thus, the present disclosure provides a waterway plate assembly for a water purifier, and the waterway plate assembly is not prone to experience a short circuit, and has a low cost and a good effect.

The present disclosure further provides a water purifier having the above-mentioned waterway plate assembly.

The waterway plate assembly for the water purifier according to embodiments of the present disclosure includes a waterway plate main body. The waterway plate main body has a first end and a second end along a length direction of the waterway plate main body. The first end is provided with a filter cartridge interface and the second end is provided with an electric element interface.

In the waterway plate assembly for the water purifier according to embodiments of the present disclosure, by disposing the filter cartridge interface and the electric element interface to two ends of the waterway plate respectively, a separation of water and electricity is realized, and a short-circuited risk for the electric element during the replacement of the filter cartridge or a leakage of the filter cartridge interface is reduced.

According to an embodiment of the present disclosure, a center axis of the filter cartridge interface and a center axis of the electric element interface are parallel with the length direction of the waterway plate main body separately, thus a structure is simple.

According to another embodiment of the present disclosure, the electric element interface includes at least one of a solenoid valve interface and a pressure switch interface so as to connect a solenoid valve or a pressure switch.

According to still another embodiment of the present disclosure, the waterway plate main body is provided with a sensor interface, and the sensor interface is located between the first end and the second end in the length direction of the waterway plate main body.

Further, a center axis of the sensor interface is perpendicular to the length direction of the waterway plate main body.

Optionally, a distance between the sensor interface and the second end is smaller than a distance between the sensor interface and the first end in the length direction of the waterway plate main body.

According to a further embodiment of the present disclosure, the waterway plate main body is provided with a waterway interface, and the waterway interface is located at the second end and a center axis of the waterway interface is parallel with the length direction of the waterway plate main body, thus the structure is simple.

Optionally, the waterway plate main body includes: a plurality of water conduits disposed parallel with one another; a mounting portion connected to one end of the plurality of water conduits and located at the first end of the waterway plate main body, the filter cartridge interface being disposed to the mounting portion; and a waterway plate connected to the other end of the plurality of water conduits and located at the second end of the waterway plate main body, the electric element interface being disposed to the waterway plate.

Optionally, a cross section of each of the water conduits is a rectangular shape, a triangle shape, a circular shape or an oval shape.

The water purifier according to embodiments of a second aspect of the present disclosure includes a waterway plate assembly for a water purifier according to the above-mentioned embodiments; a filter cartridge mounted to the first end of the waterway plate main body and connected with the filter cartridge interface; and an electric element mounted to the second end of the waterway plate main body and connected with the electric element interface.

In the water purifier according to embodiments of the present disclosure, by disposing the filter cartridge and the electric element to two ends of the waterway plate main body respectively, the filter cartridge and the electric element are spaced farther away from each other, the short-circuit will not happen to the electric element, thus a separation of water and electricity is realized and a reliability of the water purifier is improved.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view of a waterway plate assembly for a water purifier according to embodiments of the present disclosure;
Fig. 2 is a schematic view of the waterway plate assembly for the water purifier according to embodiments of the present disclosure in another view angle;
Fig. 3 is an exploded view of the waterway plate assembly for the water purifier according to embodiments of the present disclosure.

### Reference numerals:

100: waterway plate assembly;
10: waterway plate main body;
11: water conduit; 111: filter cartridge interface; 112: electric element interface; 113: sensor interface; 114: waterway interface;
12: mounting portion; 13: waterway plate.

### DETAILED DESCRIPTION

Embodiments of the present disclosure will be described in detail in the following. Examples of the embodiments are shown in the drawings, and the same or similar elements and the elements having same or similar functions are denoted by like reference numerals throughout the descriptions. The embodiments described with reference to the drawings are illustrative, which is only used to explain the present disclosure and shouldn't be construed to limit the present disclosure.

In the specification, it is to be understood that terms such as "central," "length," "width," "upper" and "lower" should be construed to refer to the orientation as then described or as shown in the drawings under discussion. These relative terms are for convenience of description and do not require that the present disclosure be constructed or operated in a particular orientation, which thus cannot be construed as limitations to the present disclosure. In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of' means two or more than two, unless specified otherwise.

In the present disclosure, it is to be noted that the terms "mounted," "connected," "coupled" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

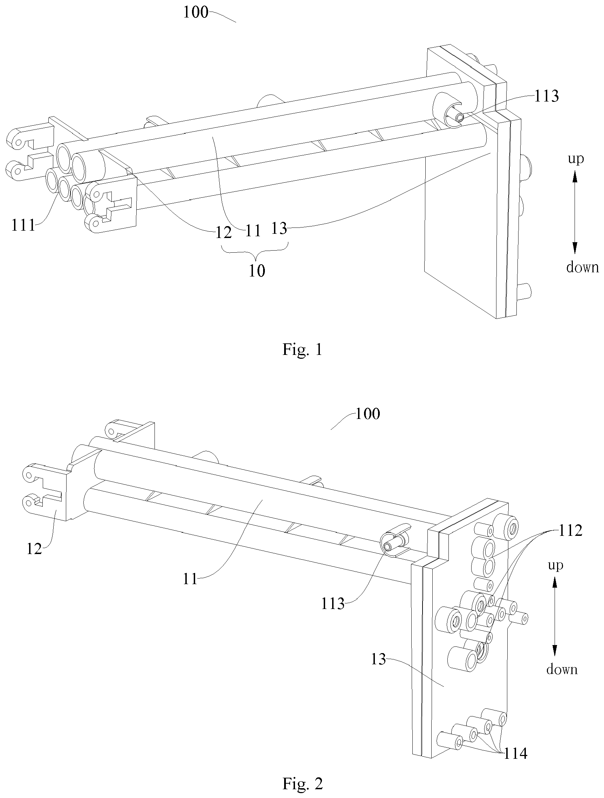

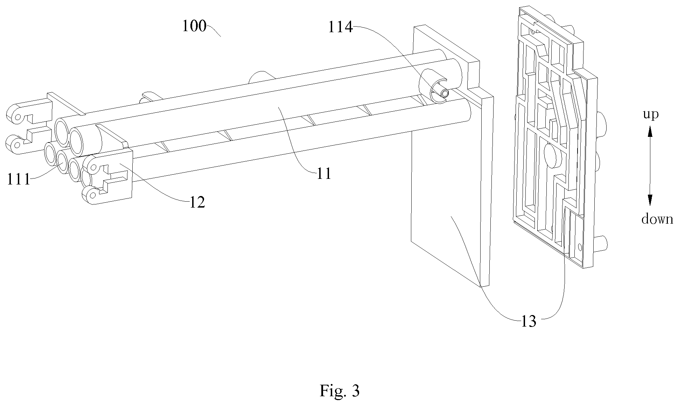

A waterway plate assembly 100 for a water purifier according to embodiments of a first aspect of the present disclosure is described with reference to Figs. 1 to 3.

As illustrated in Fig. 1, the waterway plate assembly 100 for the water purifier according to embodiments of the present disclosure includes a waterway plate main body 10.

Specifically, the waterway plate main body 10 has a first end and a second end along a length direction of the waterway plate main body 10. The first end is provided with a filter cartridge interface 111, and the filter cartridge interface 111 is connected with a filter cartridge of the water purifier. The second end is provided with an electric element interface 112, and the electric element interface 112 is connected with an electric element (not including a sensor in the present application) of the water purifier.

In the waterway plate assembly 100 for the water purifier according to embodiments of the present disclosure, by disposing the filter cartridge interface 111 and the electric element interface 112 to two ends of the waterway plate main body 10 respectively, the filter cartridge interface 111 and the electric element interface 112 are spaced farther apart, so a performance of the electric element will not be influenced when the filter cartridge is replaced or leaks, thereby realizing a separation of water and electricity, reducing a short-circuited risk for the electric element, and ensuring a using performance of the electric element.

According to an embodiment of the present disclosure, a center axis of the filter cartridge interface 111 is parallel with the length direction of the waterway plate main body 10, and a center axis of the electric element interface 112 is parallel with the length direction of the waterway plate main body 10. In such a way, the filter cartridge of the water purifier can be mounted to one end of the waterway plate main body 10 through a direction connection with the filter cartridge interface 111, and the electric element of the water purifier can be mounted to the other end of the waterway plate main body 10 through a direction connection with the electric element interface 112, which makes the filter cartridge and the electric element opposite to each other in the length direction of a waterway plate 13.

As illustrated in Fig. 2, according to another embodiment of the present disclosure, the electric element interface 112 includes at least one of a solenoid valve interface and a pressure switch interface. A plurality of electric element interfaces 112, including the solenoid valve interface and the pressure switch interface, is provided at a right side of the waterway plate main body 10. Specifically, the solenoid valve interface is connected with a solenoid valve so as to control a flow rate and direction of the water. The pressure switch interface is connected with a pressure switch so as to achieve a purpose of controlling the detected pressure by changing an on-off state of the pressure switch.

Optionally, the electric element interface 112 further includes a water quality detecting interface configured to be connected with a water quality detector so as to detect water introduced into the waterway plate 13.

According to a still another embodiment of the present disclosure, the waterway plate main body 10 is further provided with a sensor interface 113. Specifically, the sensor may be at least one of a temperature sensor and a pressure sensor. The sensor interface 113 is disposed in the length direction of the waterway plate main body 10 and located between the first end and the second end. The sensor interface 113 is configured to be connected with at least one of the temperature sensor and the pressure sensor so as to detect temperature or pressure of the water in the waterway plate main body 10.

As illustrated in Fig. 2, further, a center axis of the sensor interface is perpendicular to the length direction of the waterway plate main body 10. The sensor interface 113 is disposed at a side wall of the waterway plate main body 10 so as to detect the temperature or pressure of the water flowing into the waterway plate main body 10.

As illustrated in Fig. 2, a distance between the sensor interface 113 and the second end is smaller than a distance between the sensor interface 113 and the first end in the length direction of the waterway plate main body 10. In such a way, the first end and the sensor interface 113 are spaced farther apart, it is guaranteed that the sensor will not be influenced by the replacement or the leakage of the filter cartridge. Meanwhile, the second end is nearer to the sensor interface, thus making a layout of the sensor and the electric element (not including the sensor in the present application) more concentrated, which is convenient for the assembly, maintenance, and replacement by the operators.

According to optional embodiments of the present disclosure, the waterway plate main body 10 is provided with a waterway interface 114. Specifically, the waterway plate 13 is located at the second end and a center axis of the waterway interface 114 is parallel with the length direction of the waterway plate main body 10. That is, the waterway interface 114 and the electric element interface 112 are located at same side of the waterway plate main body 10, and the center axis of the waterway interface 114 and the center axis of the electric element interface 112 are consistent in direction, so that the layout is relatively concentrated and the structure is simple.

It should be noted that a plurality of the waterway interfaces 114 is provided. As illustrated in Fig. 2, the waterway interface 114 is located directly under the electric element interface 112. Four waterway interfaces 114 are arranged along a width direction of the waterway plate 13, two of the four waterway interfaces 114 are connected with tap water pipelines and the other two are connected with water faucets of the user. The tap water enters the waterway plate 13 through the waterway interface 114, arrives at the filter cartridge interface 111 through a water conduit 11, and enters the filter cartridge to be filtered. The pure water after a filtration enters a waterway in the waterway plate 13 through the water conduit 11, and can be obtained by means of the water faucet connected with the waterway interface 114.

According to optional embodiments of the present disclosure, the waterway plate main body 10 includes a plurality of water conduits 11, a mounting portion 12 and a waterway plate 13. The plurality of water conduits 11 is disposed parallel with one another. The mounting portion 12 is connected to one end of the plurality of water conduits 11 and located at the first end of the waterway plate main body 10. A filter cartridge interface 111 is disposed to the mounting portion 12. The waterway plate 13 is connected to the other end of the plurality of water conduits 11 and located at the second end of the waterway plate main body 10, and the electric element interface 112 is disposed to the waterway plate 13. The mounting portion 12 is connected with parts and components of the filter cartridge, thereby making a layout of the filter cartridge more compact.

Further, a cross section of each of the water conduits 11 may be a rectangular shape, a triangle shape, a circular shape or an oval shape. The cross section of the water conduit 11 illustrated in Fig. 1 is a circular shape, but the present application does not have a specific limitation to this, and the shape of the cross section of the water conduit 11 can be configured according to specific requirements.

The water purifier according to embodiments of a second aspect of the present disclosure includes a filter cartridge, an electric element and a waterway plate assembly 100 according to the above-mentioned embodiments. The filter cartridge is mounted to a first end of a waterway plate main body 10 through a connection with the filter cartridge interface 111. The electric element is mounted to the second end of the waterway plate main body 10 through a connection with the electric element interface 112.

In the water purifier according to the embodiments of the second aspect of the present disclosure, by disposing the filter cartridge interface 111 and the electric element interface 112 to two ends of the waterway plate main body 10 respectively, the filter cartridge is enabled to be connected with the filter cartridge interface 111 and the electric element is enabled to be connected with the electric element interface 112, the filter cartridge and the electric element are spaced farther apart, so a performance of the electric element will not be influenced when the filter cartridge is replaced or leaks, thus realizing a separation of water and electricity, reducing a short-circuited risk for the electric element, and improving the reliability of the water purification machine.

Other configurations and operations of the waterway plate assembly 100 for the water purifier and the water purifier having the same according to embodiments of the present disclosure are known to those ordinarily skilled in the related art, which will not be described in detail herein.

Reference throughout this specification to "an embodiment," "some embodiments," "an illustrative embodiment", "an example," "a specific example," or "some examples," means that a particular feature, structure, material, or characteristic described in connection with the embodiment or example is included in at least one embodiment or example of the present disclosure. Thus, the appearances of the phrases above in various places throughout this specification are not necessarily referring to the same embodiment or example of the present disclosure. Furthermore, the particular features, structures, materials, or characteristics may be combined in any suitable manner in any one or more embodiments or examples.

Although embodiments of the present disclosure have been shown and described, it would be appreciated by those skilled in the art that changes, alternatives, variations and modifications can be made in the embodiments without departing from spirit and principles of the present disclosure, and the scope of the present disclosure is defined by the claims and its equivalents.

## Claims

1. A waterway plate assembly for a water purifier, comprising:
a waterway plate main body having a first end and a second end along a length direction of the waterway plate main body, the first end being provided with a filter cartridge interface and the second end being provided with an electric element interface.

2. The waterway plate assembly for the water purifier according to claim 1, wherein a center axis of the filter cartridge interface and a center axis of the electric element interface are parallel with the length direction of the waterway plate main body separately.

3. The waterway plate assembly for the water purifier according to claim 1, wherein the electric element interface comprises at least one of a solenoid valve interface and a pressure switch interface.

4. The waterway plate assembly for the water purifier according to claim 1, wherein the waterway plate main body is provided with a sensor interface, and the sensor interface is located between the first end and the second end in the length direction of the waterway plate main body.

5. The waterway plate assembly for the water purifier according to claim 4, wherein a center axis of the sensor interface is perpendicular to the length direction of the waterway plate main body.

6. The waterway plate assembly for the water purifier according to claim 4, wherein a distance between the sensor interface and the second end is smaller than a distance between the sensor interface and the first end in the length direction of the waterway plate main body.

7. The waterway plate assembly for the water purifier according to claim 1, wherein the waterway plate main body is provided with a waterway interface, and the waterway interface is located at the second end and a center axis of the waterway interface is parallel with the length direction of the waterway plate main body.

8. The waterway plate assembly for the water purifier according to any one of claims 1 to 7, wherein the waterway plate main body comprises:
a plurality of water conduits disposed parallel with one another;
a mounting portion connected to one end of the plurality of water conduits and located at the first end of the waterway plate main body, the filter cartridge interface being disposed to the mounting portion; and
a waterway plate connected to the other end of the plurality of water conduits and located at the second end of the waterway plate main body, the electric element interface being disposed to the waterway plate.

9. The waterway plate assembly for the water purifier according to claim 8, wherein a cross section of each of the water conduits is a rectangular shape, a triangle shape, a circular shape or an oval shape.

10. A water purifier, comprising:
a waterway plate assembly for a water purifier according to any one of claims 1 to 9;
a filter cartridge mounted to the first end of the waterway plate main body and connected with the filter cartridge interface; and
an electric element mounted to the second end of the waterway plate main body and connected with the electric element interface.
